# EUROPEAN PATENT SPECIFICATION

(11) **EP 2 870 059 B1**
(45) Date of publication and mention of the grant of the patent: **06.09.2017**
(21) Application number: 13737359.3
(22) Date of filing: 05.07.2013
(51) Int. Cl.: B62H 3/12

(54) **BICYCLE WHEEL STORAGE UNIT**
FAHRRADLAUFRADAUFBEWAHRUNGSEINHEIT
UNITÉ DE RANGEMENT DE ROUE DE VÉLO

(30) Priority: 05.07.2012 GB 201211968
(43) Date of publication of application: 13.05.2015
(73) Proprietor: Andrew Lang Product Design Limited, London E8 3DP (GB)
(72) Inventor: LANG, Andrew, London E8 3DP (GB)
(74) Representative: Langley, Peter James
(86) International application number: PCT/GB2013/051788
(87) International publication number: WO 2014/006419

(56) References cited:
- WO-A1-93/07786
- CN-Y- 2 486 061
- US-A- 5 941 397
- US-A1- 2011 240 572

## Description

### BACKGROUND OF THE INVENTION

### 1. Field of the Invention

The field of the invention relates to wall mountable units, to kits of parts and to methods for storing and displaying bicycles, bicycle wheels and the like. 2. Technical Background

A bicycle storage device is a device to which bicycles may be securely attached and stored. A bicycle storage device may be free standing or securely attached to the ground or some stationary object such as a building or a rack. In the case of many bicycles but limited space, bicycles may be hung to free up as much floor space as possible. There are at least two ways for hanging bicycles. In one case, bicycles are hung with their frames parallel to the wall. This option lets the bicycle stay close to the wall, taking up usable wall space. It may be a good choice for hanging only one or two bicycles. In another case, bicycles are hung perpendicular to the wall. This option takes up less wall space but more space in the room. It is an efficient way to hang multiple bicycles.

### 3. Discussion of Related Art

If the bicycle is hung perpendicularly to the wall, the wheels may face the wall and the frame may be vertical. This orientation will allow the bicycle to roll up the wall and hook the front wheel by turning the handlebar. Supporting racks or hangers are known in the prior art, the installment of which requires at least mounting or supporting hardware such as bars or a hanger, hand drills and a screwdriver.

In US05332104 there is described a bicycle storage device which includes a housing bracket and first and second bicycle support members. Each member is moveable from a storage position to a bicycle support position; each member has an elongated arm which rotates from an upward stored position to a horizontally extending support position with a resilient member maintaining the members in a storage position.

US5941397(A), which is the closest prior art, discloses a holder for a bicycle having a first wheel and a second wheel, each wheel including a rim and a tire. The holder includes a floor supported channel for receiving the first wheel, a wall supported channel situated adjacent to the floor supported channel for receiving the first wheel, a wall supported standard situated above the wall supported channel, and a wheel engaging apparatus connected to the wall supported standard for engaging the second wheel. The wheel engaging apparatus includes a base, a coupling member coupling the base to the wall supported standard, an axis defining member fixed to the base, a pivot member pivotally engaging the axis defining member, a first arm and a second arm, both arms having a proximal portion fixed to the pivot member for pivotal displacement with respect to the base between a wheel engaging position and a wheel releasing position. The first arm includes a distal portion adapted to engage the rim portion of the second wheel and the second arm includes a distal portion adapted to engage the tire of the second wheel when the pivot member is situated in the wheel engaging position. A third arm is fixed to the pivot member for pivotal displacement with respect to the base, and a biasing member is coupled between the third arm and the base for biasing the pivot member toward the wheel engaging position.

### SUMMARY OF THE INVENTION

According to a first aspect of the invention, as in claim 1, there is provided a wall mountable unit for storing a bicycle wheel, the unit comprising at least a wall mountable part and a hook component in hinged attachment with the wall mountable part, the hook component rotatable using the hinged attachment between an open configuration and a closed configuration, wherein, in use, in the open configuration the hook component is arranged to receive and to store a bicycle wheel. The bicycle wheel may or may not be attached to a bicycle. An advantage is that the unit enables bicycle wheels or bicycles to be stored vertically, which may be a preferred arrangement in circumstances in which many bicycles or bicycle wheels are stored on a wall. A further advantage is that the unit may be relatively compact, eg. if its greatest length is less than the diameter of a bicycle wheel stored in the unit. The wall mountable part may comprise a wall plate, a frame or a bracket for example. The wall mountable part may be mounted on a wall by screwing, welding or bolting, for example.

The wall mountable unit may be one wherein, in use, in the closed configuration a face of the hook component is in facial contact with a face of the wall mountable part. An advantage is a compact arrangement when closed; a further advantage is the hook is not open to accidentally catch on passing objects.

The wall mountable unit may be one wherein, in use, in the closed configuration, a plane of the hook component is parallel with a plane of the wall mountable part. An advantage is compact storage when closed; a further advantage is the hook is not open to accidentally catch on passing objects.

The wall mountable unit may be one wherein the hook component includes a rib. An advantage is increased strength of the hook component, and a further advantage is increased bearing surface area for the wheel rim where it makes contact with the hook component.

The wall mountable unit may be one wherein the wall mountable part includes a wall plate including a rebate, wherein the rib is configured to fit into the rebate when the unit is in a closed configuration. An advantage is compact storage.

The wall mountable unit may be one wherein, in use, the hook component is rotatable in a vertical plane. An advantage is that the unit enables bicycle wheels or bicycles to be stored vertically, which may be a preferred arrangement in circumstances in which many bicycles or bicycle wheels are stored on a wall.

The wall mountable unit may be one wherein, in use, the hook component is rotatable upwards in moving from the closed configuration to the open configuration. An advantage is that the hook component may be rotated less than 90 degrees for use in bicycle wheel storage, which reduces wear on the hinged attachment.

The wall mountable unit may be one wherein the unit includes a hinge.

The wall mountable unit may be one wherein the hinge is hollow and configured to receive a bicycle lock. An advantage is that a bicycle lock may be used to secure the bicycle wheel to the unit. Alternatively with a long articulating or flexible lock the bicycle frame may be secured to the unit.

The wall mountable unit may be one wherein the hinge includes a first hinge pin, and the hinge includes a tapered bore configured to receive and to secure the first hinge pin. An advantage is a secure arrangement for the hinge pin.

The wall mountable unit may be one wherein wherein the hinge includes a second hinge pin and the hinge includes a tapered bore configured to receive and to secure the second hinge pin. An advantage is a secure arrangement for the hinge pins.

The wall mountable unit may be one for storing and displaying bicycles or bicycle wheels vertically, the wall mountable part comprising at least a wall plate, wherein the hook component is for locating the rim of a wheel, and including a hinge allowing the hook component to rotate to an open or closed position.

The wall mountable unit may be one wherein the wall plate incorporates an elastomer element to protect naked wheel rims around the circumference at the contact points.

The wall mountable unit may be one wherein fixing holes are located in a shadow of the rebate and covered when the unit is in the closed configuration.

The wall mountable unit may be one wherein end faces of the first and second hinge pins are arranged such that in use they abut.

The wall mountable unit may be one wherein the hook component allows a wheel stored in the unit to rest against the unit below the hook component.

The wall mountable unit may be one wherein the hook component has a width that allows it to fit wheels between spokes of the wheel.

The wall mountable unit may be one wherein the hook component incorporates a soft elastomer element where a wheel rim makes contact, wherein the element is moulded over a more rigid structural element to prevent damage to the rim.

The wall mountable unit may be one wherein the hook component, under a load of a bicycle wheel of a given size, automatically rotates to an angle appropriate for the radius of that wheel.

The wall mountable unit may be one wherein the hook component, when not in use, may be folded flat.

The wall mountable unit may be one wherein the hook component and wall mountable part incorporate a clip feature allowing the hook component to be clipped into either an open or a closed position.

The wall mountable unit may be one wherein a side of the wall mountable part incorporates a shallow recess to aid finger purchase when opening the hook component.

The wall mountable unit may be one wherein a self weight of a wheel and/or bicycle between two contact points keeps the wheel in place.

The wall mountable unit may be one wherein the unit is operable to store a bicycle wheel with a diameter greater than a greatest length of the wall mountable unit. An advantage is compactness of the unit in relation to the bicycle wheel.

According to an aspect, there is provided a kit of parts comprising a wall mountable unit of any aspect according with the first aspect of the invention, and a subsidiary wall plate for a second wheel contact point, wherein in use the subsidiary wall plate is configurable to prevent dirty marks and damage to a wall.

The kit of parts may be one wherein the subsidiary wall plate for the second wheel can be fixed to die wall at an appropriate distance below the wall mountable unit by either self-adhesive double sided pad or conventional screw fixings.

The kit of parts may be one wherein the subsidiary wall plate incorporates an elastomer pad to protect naked wheel rims around the circumference at the contact points.

The kit of parts may be one wherein the elastomer pad on the subsidiary wall plate hides fixing holes in the plastic moulding.

The kit of parts may be one wherein the subsidiary wall plate can be used for other purposes if not required for wall protection.

According to an aspect, there is provided a kit of parts for assembly for storing a bicycle wheel, the kit of parts when assembled forming a unit, the kit of parts comprising at least a body and a hook component in hinged attachment with the body, and further comprising a part fixable to a wall, wherein in use the part fixable to a wall is fixed to the wall, and the body is retained securely to the wall by the part fixed to the wall, wherein the hook component is rotatable using the hinged attachment between an open configuration and a closed configuration, and wherein, in use, in the open configuration the hook component is arranged to receive a bicycle wheel and to store the bicycle wheel in the unit. The part fixable to a wall may be fixed to the wall by screwing, welding or bolting, for example.

The kit of parts may be one wherein the body comprises a frame or structural element, and the part fixable to a wall comprises a separate wall plate with fixing holes, and wherein in use the wall plate is used to retain the frame or structural element and hook elements securely to the wall by clasping the frame or structural element between the wall and the wall plate.

The kit of parts may include any aspect according to a first aspect of the invention.

According to a second aspect of the invention, there is provided a method of using a wall mountable unit of any aspect according with the first aspect of the invention for storing and displaying bicycles or bicycle wheels vertically, the method comprising the steps of: rotating the hook component to an angle appropriate for the radius of the bicycle wheel, when it is opened;
inserting the bicycle wheel into the hook component, and
allowing the bicycle wheel to lower gently under gravity, so that the wheel is secured by the wall mountable unit.

### BRIEF DESCRIPTION OF THE FIGURES

Aspects of the invention will now be described, by way of example(s), with reference to the following Figures, in which:
**Figure 1** shows a front view of a wall mountable unit for storing a bicycle wheel, including a first wall plate, with a hook component in a closed, flat configuration, a rubber contact pad and a wheel rest.
**Figure 2** shows a back view of the wall mountable unit for storing a bicycle wheel of **Figure 1****.**
**Figure 3** shows a side view of the wall mountable unit for storing a bicycle wheel of **Figure 1****.**
**Figure 4** shows a top view of the wall mountable unit for storing a bicycle wheel of **Figure 1****.**
**Figure 5** shows a bottom view of the wall mountable unit for storing a bicycle wheel of **Figure 1****.**
**Figure 6** is a perspective view of the wall mountable unit for storing a bicycle wheel of **Figure 1****,** with the hook component in an open configuration.
**Figure 7** shows a perspective view of the wall mountable unit for storing a bicycle wheel of **Figure 1****.**
**Figure 8** shows an example of an installed wall mounted unit, including the wall mountable unit for storing a bicycle wheel of **Figure 1** with the hook component in an open configuration, and a second wall plate.
**Figure 9** shows an exploded view of the wall mountable unit for storing a bicycle wheel of **Figure 1****,** with the hook component in an open configuration.
**Figure 10** shows examples of three applications of the wall mountable unit for storing a bicycle wheel, in which (A) shows the hook component in a closed configuration, (B) shows the hook component in an open configuration, and (C) shows the hook component in a closed configuration with a bicycle lock having been passed through the hollow hinge.
**Figure 11** shows an example of a bicycle hanging on a wall mounted storage unit, and in contact with first and second wall plates.

### DETAILED DESCRIPTION

A wall mountable storage unit provides a solution for storing and displaying bicycles and bicycle wheels vertically, comprising at least a wall plate, a hook component for locating the rim of a wheel, and a hinging hook component allowing the hook component to rotate to an open or closed position. It is particularly advantageous within an interior space.

The storage unit having a hook element automatically adjusts to accommodate a wide range of wheel sizes. The hinge enables the hook element to be folded to a certain degree between 0 to 55 degrees in an example, and a conventional bicycle lock may be used through the hollow hinge for additional security. Integrated rubber contact pads offer protection to the wheels and prevent damage to the walls.

The storage unit may combine with the bicycles own weight and hold the bicycles instantly in place. The hook component can be closed flat when not in use. As a storage partner, it is suitable for storage with many bikes but limited space.

### Main technical features:

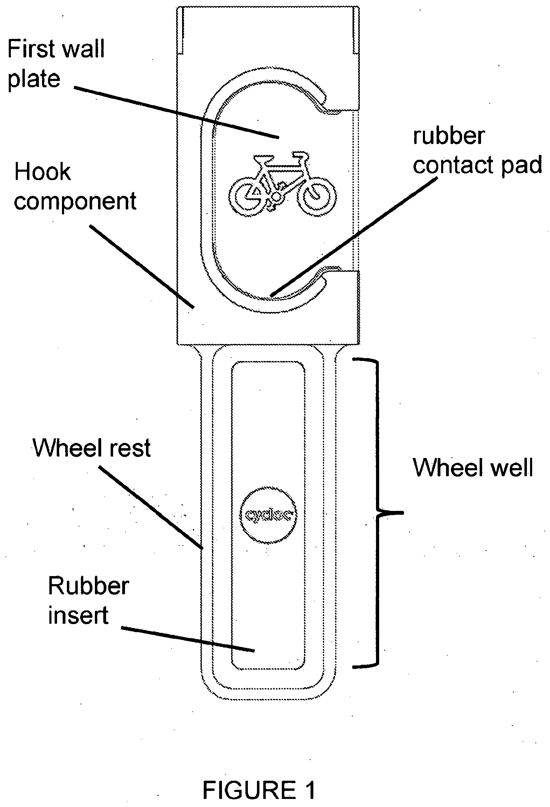

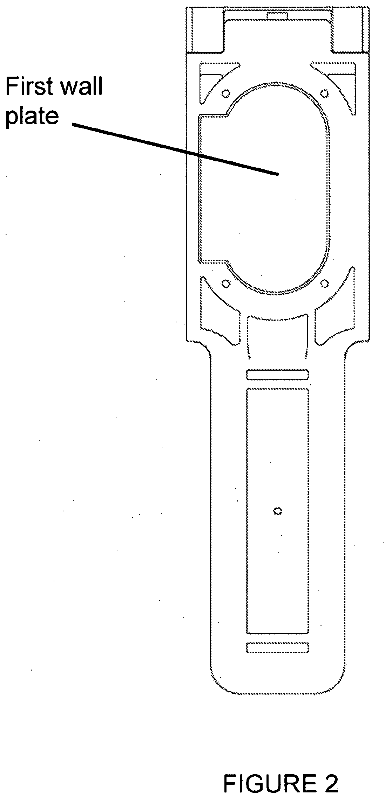

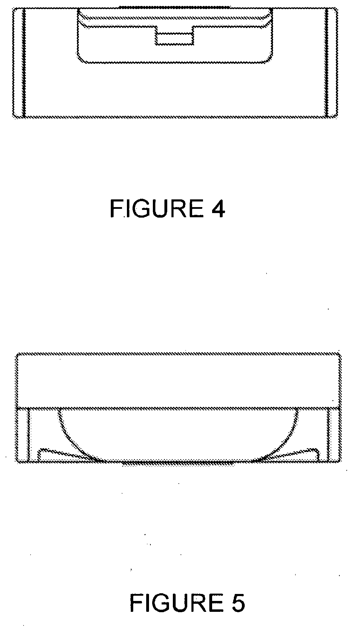

There is provided a wall mountable product for storing and displaying bicycles and bicycle wheels vertically. Examples are shown in **Figures 1** to **11****.**

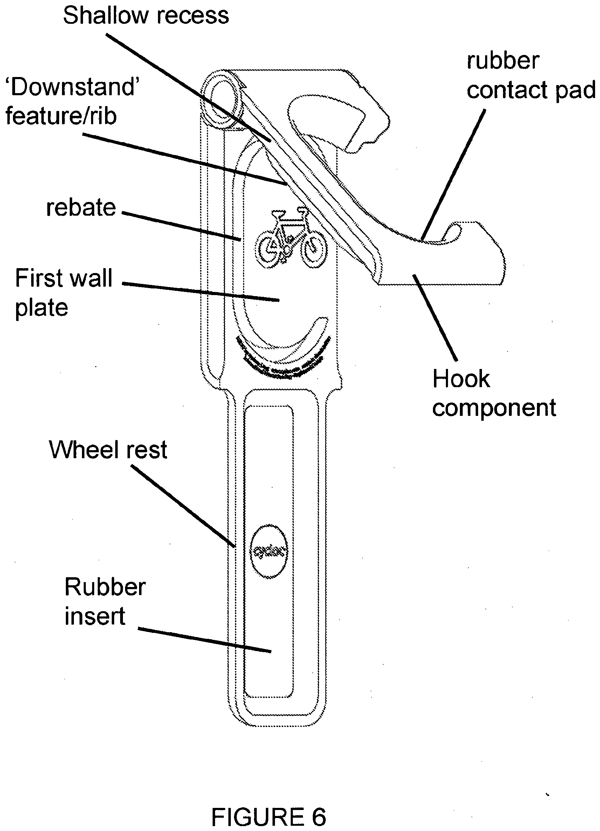

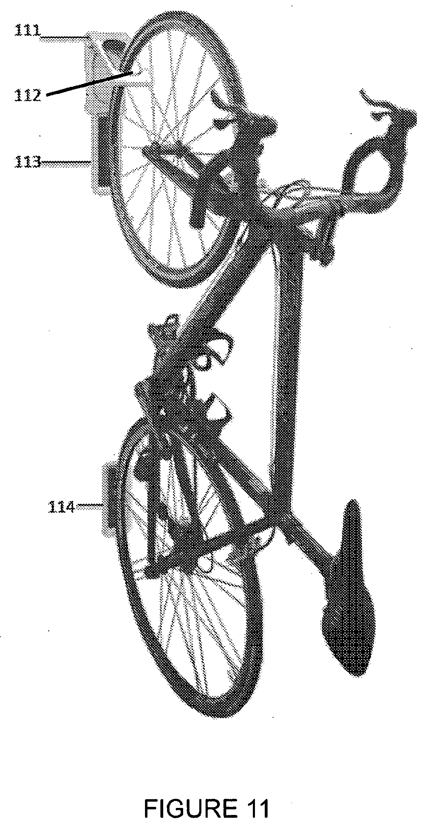

In an example, a hook feature locates around the rim of a wheel, the wheel then rests against the unit below the hook. The self weight of the wheel (and/or bike) between the two contact points keeps it in place. With reference to **Figure 6** by way.of example, the two contact points are where a wheel rim (not shown) contacts the rubber contact pad, and where a wheel tyre (not shown) contacts the rubber insert. With reference to **Figure 11** by way of example, the two contact points are where a front wheel rim contacts the rubber contact pad of the hook component, and where a front wheel tyre contacts the rubber insert of the first wall plate.

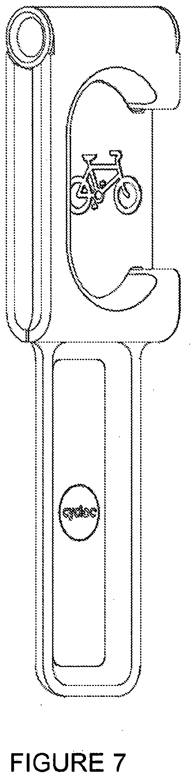

When not in use the hook element of the product can be folded flat, enabling the installed unit to be discrete and unobtrusive, particularly advantageous within an interior space. Examples are shown in **Figures 1** to **5** and in **Figure 7****.**

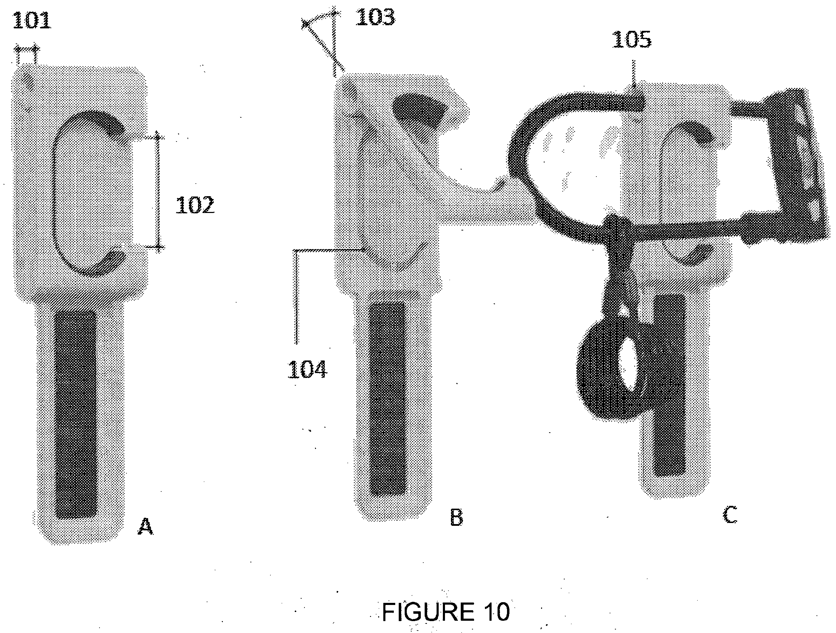

The hinge detail along the top edge of the unit is hollow enabling a conventional bicycle lock to be passed through the hinge. An example is shown in (C) of **Figure 10****.**

A width of a hook element, where it makes contact with the rim of a wheel, is of a dimension that allows it to fit between the spokes of a small diameter wheel (16") wheel or a large (29") wheel while providing the maximum load bearing surface.

The hook component has a soft elastomer element where the wheel rim makes contact, moulded over a more rigid structural element, to prevent damage to the rim. An example is the rubber contact pad of **Figure 1****.**

The hinging hook component rotates around the axis of the hinge and under the load of a bicycle wheel of any given size the hook component rotates to an angle appropriate for the radius of that wheel.

The hook component and wall plate incorporate a clip feature allowing the hook to be securely clipped in either the open or closed position.

The hook component incorporates a 'downstand' feature / rib that nests into a rebate in the wall plate when the unit is folded flat, this maximises the stiffness of the hook element and bearing surface for the wheel while minimising the overall 'closed' thickness of the unit. An example of the hook component in an open configuration, in which the 'downstand' feature / rib and the rebate in the wall plate can be seen, is shown in **Figure 6****.**

The base of the rebate in the wall plate for the hook 'downstand' rib also incorporates the four fixing holes for securing the wall plate to a wall, thereby the fixings are discretely located in the shadow of the rebate and completely covered when the unit is closed flat.

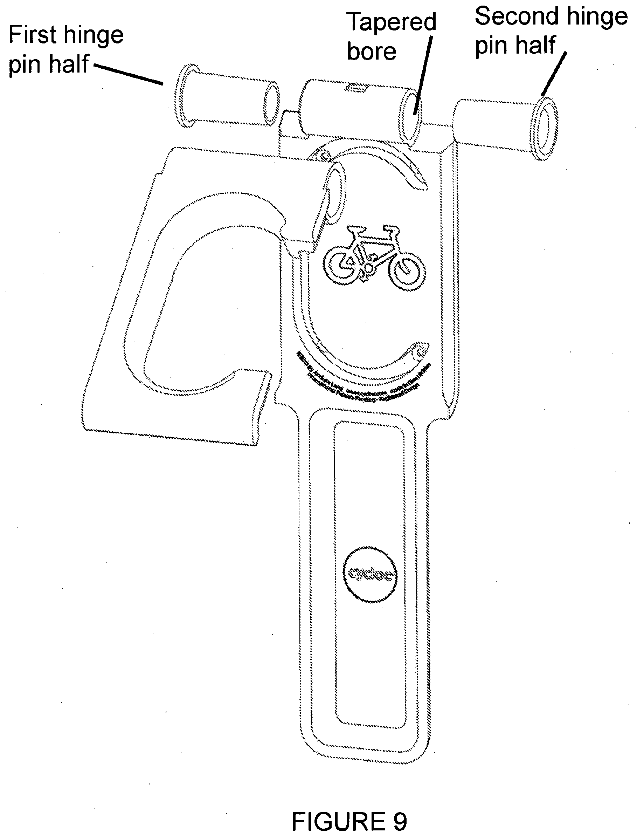

The hinge pin consists of two common halves, secured by a taper fit in a corresponding tapered bore of the wall plate. An example is shown in **Figure 9****.** Where the end faces of the two hinge halves abut, these can also be secured mechanically, by welding or by use of an adhesive for example.

The wheel well of the wall plate incorporates an elastomer element, this enables the part to be produced in light colours with a contrasting dark contact point for the tyre ensuing that dirt does not become a distraction. An example is shown in **Figure 1****.**

The elastomer element of the wheel well also offers protection to the contact points of naked wheel rims around the circumference should they be placed in the unit perhaps for retail display or storage purposes.

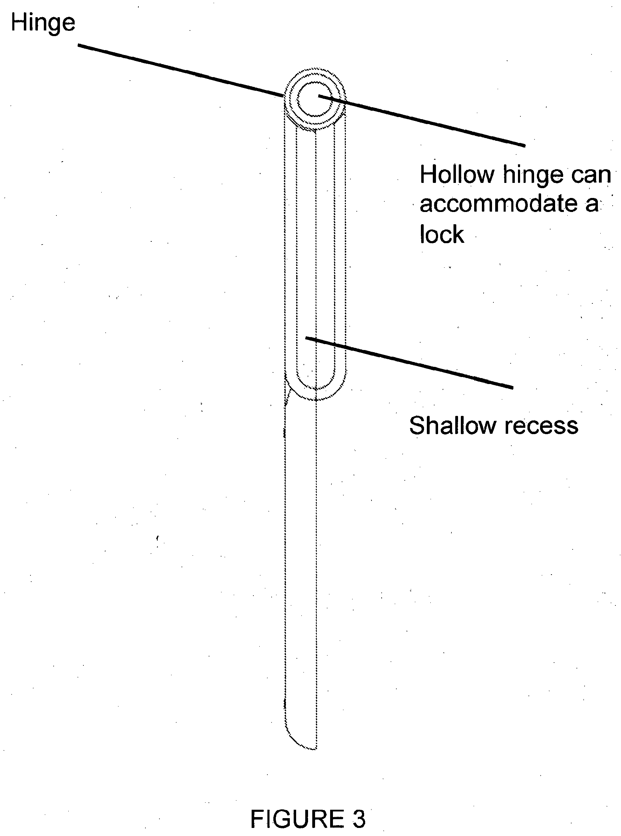

The side of the unit incorporates a shallow recess to aid finger purchase when opening the hook. Examples are shown in **Figure 3** and in **Figure 6****.**

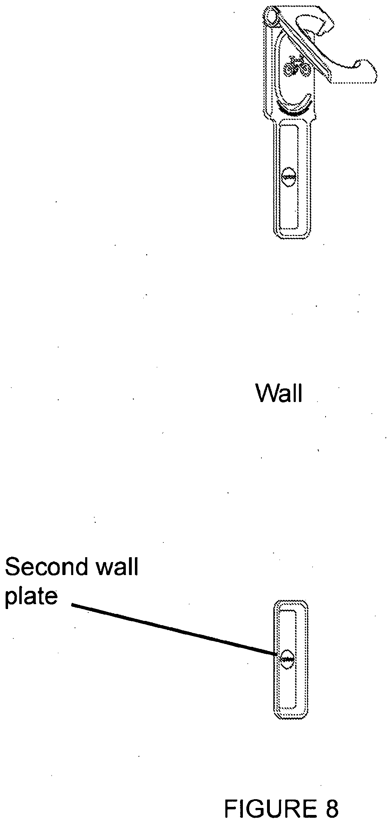

A separate, second wall plate is included for the second wheel contact point to prevent dirty marks and damage to the wall. The second wall plate for the second wheel can be fixed to the wall at an appropriate distance below the main unit by either self-adhesive double sided pad or conventional screw fixings. The elastomer pad on the wall plate for the second wheel hides the fixing holes in the plastic moulding. Examples are shown in **Figure 8** and in **Figure 11****.**

The secondary wall plate can be used for other purposes if not required for wall protection, perhaps as a small tray for placing objects.

When packaged for shipping and retail the rear wheel pad nests into the wheel recess of the wall plate of the main unit.

The wall mountable unit structure provides more flexible and stable storage than typical wall mounted hangers or supporters. A rotatable hook element is adjustable to an open or closed position and accommodates different wheel sizes; integrated rubber contact pads to protect the wheels and prevent damage to the wall, and the hollow hinge enables a conventional bicycle lock to be used for additional security.

### Examples

In an example of a wall mountable unit for storing a bicycle wheel, the unit is only 32mm thick (**101**) when the hook is folded flat. A C-shaped hook (**102**) may accommodate wheels between the spokes of a small diameter wheel (16") wheel and a large (29") wheel--from 16' to 29'. **Fig. 10** illustration A shows an example of a wall mountable unit for storing a bicycle wheel in the closed configuration.

In an example of a wall mountable unit for storing a bicycle wheel, the hook element may rotate 0-55 degree (**103**) to suit the radius of different types of wheels. In this example, there are four fixing holes in the base of the rebate for mounting the wall plate to a wall, the fixings are discretely located in the shadow of the rebate (**104**) and completely covered when the unit is closed. This storage unit can be used singly, with fixings to mount it to the wall. **Fig. 10** illustration B shows an example of this storage unit when in an open configuration.

In an example of a wall mountable unit for storing a bicycle wheel, a hollow hinge (**105**) can accommodate a D-lock. **Fig. 10** illustration C shows an example of this storage unit when it is with the lock.

In an example of a bicycle stored and displayed on a storage unit, a locking facility incorporates a hollow hinge (**111**) to accommodate lock. Rubber contact pad (**112**) can be used to protect your wheel rim. Front wheel rest (**113**) with rubber insert protects the wall from damage. Rear wheel rest (**114**) with rubber insert may protect the wall from damage. The greatest length of a unit may be less than the diameter of a bicycle wheel stored in the unit, see eg. **Fig. 11****.**

### Note

It is to be understood that the above-referenced arrangements are only illustrative of the application for the principles of the present invention. Numerous modifications and alternative arrangements can be devised without departing from the scope of the present invention. While the present invention has been shown in the drawings and fully described above with particularity and detail in connection with what is presently deemed to be the most practical and preferred example(s) of the invention, it will be apparent to those of ordinary skill in the art that numerous modifications can be made without departing from the principles and concepts of the invention as set forth herein.

## Claims

1. Wall mountable unit for storing a bicycle wheel, the unit comprising at least a wall mountable part and a hook component (102) in hinged attachment (105, 111) with the wall mountable part, the hook component (102) rotatable using the hinged attachment (105, 111) between an open configuration and a closed configuration, wherein, in use, in the open configuration the hook component (102) is adapted to be inserted in a bicycle wheel and to store the bicycle wheel in the unit whereby hinge rotation of the hook component towards said closed configuration allows the bicycle wheel to lower gently under gravity, so that the wheel is secured by the wall mountable unit.

2. Wall mountable unit of Claim 1, wherein, in use, in the closed configuration a face of the hook component (102) is in facial contact with a face of the wall mountable part.

3. Wall mountable unit of Claims 1 or 2, wherein, in use, in the closed configuration, a plane of the hook component (102) is parallel with a plane of the wall mountable part.

4. Wall mountable unit of any previous Claim, wherein the hook component (102) includes a rib.

5. Wall mountable unit of Claim 4, wherein the wall mountable part includes a wall plate including a rebate (104), wherein the rib is configured to fit into the rebate (104) when the unit is in a closed configuration.

6. Wall mountable unit of any previous Claim, wherein, in use, the hook component (102) is rotatable in a vertical plane.

7. Wall mountable unit of Claim 6, wherein, in use, the hook component (102) is rotatable upwards in moving from the closed configuration to the open configuration.

8. Wall mountable unit of any previous Claim, wherein the unit includes a hinge (105,111).

9. Wall mountable unit of Claim 8, wherein the hinge (105, 111) is hollow and configured to receive a bicycle lock.

10. Wall mountable unit of Claim 9, wherein the hinge (105, 111) includes a first hinge pin, and the hinge includes a tapered bore configured to receive and to secure the first hinge pin.

11. Wall mountable unit of Claim 10, wherein the hinge (105, 111) includes a second hinge pin and the hinge includes a tapered bore configured to receive and to secure the second hinge pin.

12. Wall mountable unit of any of Claims 1 to 4 for storing and displaying bicycles or bicycle wheels vertically, the wall mountable part comprising at least a wall plate, wherein the hook component (102) is for locating the rim of a wheel, and including a hinge (105, 111) allowing the hook component (102) to rotate to an open or closed position.

13. Wall mountable unit of Claim 12, wherein the wall plate incorporates an elastomer element (113) to protect naked wheel rims around the circumference at the contact points.

14. Wall mountable unit of Claim 5, wherein fixing holes are located in a shadow of the rebate (104) and covered when the unit is in the closed configuration.

15. Wall mountable unit of any previous Claim, wherein the hook component (102), when not in use, may be folded flat.

16. Method of using a wall mountable unit of any previous Claim, for storing and displaying bicycles or bicycle wheels vertically, the method comprising the steps of:
rotating the hook component (102) to an angle appropriate for the radius of the bicycle wheel, when the hook component (102) is opened;
inserting the bicycle wheel into the hook component (102), and
allowing the bicycle wheel to lower gently under gravity, so that the wheel is secured by the wall mountable unit.

## Patentansprüche

1. Wandmontageeinheit zum Aufbewahren eines Fahrradlaufrades, wobei die Einheit mindestens ein Wandmontageteil und eine Hakenkomponente (102) in einer Klappbefestigung (105, 111) mit dem Wandmontageteil aufweist, wobei die Hakenkomponente (102) unter Verwendung der Klappbefestigung (105, 111) zwischen einer offenen Konfiguration und einer geschlossenen Konfiguration drehbar ist, wobei im Gebrauch in der offenen Konfiguration die Hakenkomponente (102) eingerichtet ist, um in ein Fahrradlaufrad eingeführt zu werden, und um das Fahrradlaufrad in der Einheit aufzubewahren, wodurch eine Scharnierrotation der Hakenkomponente, die in Richtung der geschlossenen Konfiguration erfolgt, ermöglicht, dass sich das Fahrradlaufrad sanft unter Schwerkraft absenkt, sodass das Laufrad durch die Wandmontageeinheit gesichert ist.

2. Wandmontageeinheit nach Anspruch 1, wobei im Gebrauch in der geschlossenen Konfiguration eine Fläche des Hakenkomponententeils (102) in Berührung mit einer Fläche des Wandmontageteils steht.

3. Wandmontageeinheit nach Anspruch 1 oder 2, wobei im Gebrauch in der geschlossenen Konfiguration eine Ebene der Hakenkomponente (102) parallel zu einer Ebene des Wandmontageteils ist.

4. Wandmontageeinheit nach einem der vorangegangenen Ansprüche, wobei die Hakenkomponente (102) eine Rippe beinhaltet.

5. Wandmontageeinheit nach Anspruch 4, wobei das Wandmontageteil eine Wandplatte mit einer Aussparung (104) aufweist, wobei die Rippe so konfiguriert ist, dass sie in die Aussparung (104) passt, wenn sich die Einheit in einer geschlossenen Konfiguration befindet.

6. Wandmontageeinheit nach einem der vorangegangenen Ansprüche, wobei die Hakenkomponente (102) auf einer vertikalen Ebene drehbar ist.

7. Wandmontageeinheit nach Anspruch 6, wobei im Gebrauch die Hakenkomponente (102) nach oben drehhbar ist, indem sie sich von der geschlossenen Konfiguration in die offene Konfiguration bewegt.

8. Wandmontageeinheit nach einem der vorangegangenen Ansprüche, wobei die Einheit ein Scharnier (105, 111) beinhaltet.

9. Wandmontageeinheit nach Anspruch 8, wobei das Scharnier (105, 111) hohl und konfiguriert ist, um ein Fahrradschloss aufzunehmen

10. Wandmontageeinheit nach Anspruch 9, wobei das Scharnier (105, 111) einen ersten Scharnierstift beinhaltet und das Scharnier eine konische Bohrung beinhaltet, die konfiguriert ist, um den ersten Scharnierstift aufzunehmen und zu sichern.

11. Wandmontageeinheit nach Anspruch 10, wobei das Scharnier (105, 111) einen zweiten Scharnierstift beinhaltet und das Scharnier eine konische Bohrung beinhaltet, die konfiguriert ist, um den zweiten Scharnierstift aufzunehmen und zu sichern.

12. Wandmontageeinheit einem der Ansprüche 1 bis 4 zum vertikalen Aufbewahren und Präsentieren von Fahrrädern oder Fahrradlaufrädern, wobei das Wandmontageteil mindestens eine Wandplatte umfasst, wobei die Hakenkomponente (102) zum Platzieren der Felge eines Laufrades dient und ein Scharnier (105, 111) beinhaltet, das es der Hakenkomponente (102) ermöglicht, sich in eine offene oder geschlossene Position zu drehen.

13. Wandmontageeinheit nach Anspruch 12, wobei die Wandplatte ein Elastomerelement (113) beinhaltet, um blanke Laufradfelgen um den Umfang an den Kontaktstellen zu schützen.

14. Wandmontageeinheit nach Anspruch 5, wobei Befestigungslöcher im Schatten der Aussparung (104) positioniert und abgedeckt sind, wenn sich die Einheit in der geschlossenen Konfiguration befindet.

15. Wandmontageeinheit nach einem der vorangegangenen Ansprüche, wobei die Hakenkomponente (102), wenn nicht in Gebrauch, flach zusammengeklappt werden kann.

16. Verfahren zur Verwendung einer Wandmontageeinheit nach einem der vorangegangenen Ansprüche, zum vertikalen Aufbewahren und Präsentieren von Fahrrädern oder Fahrradlaufrädern, wobei das Verfahren die folgenden Schritte umfasst:
Drehen die Hakenkomponente (102) in einem Winkel, der für den Radius des Fahrradlaufrades geeignet ist, wenn die Hakenkomponente (102) geöffnet wird;
Einführen des Fahrradlaufrades in die Hakenkomponente (102), und
Ermöglichen, dass sich das Fahrradlaufrad sanft unter Schwerkraft absenkt, sodass das Laufrad durch die Wandmontageeinheit gesichert ist.

## Revendications

1. Unité à montage mural pour ranger une roue de vélo, l'unité comprenant au moins une pièce à montage mural et un composant de crochet (102) dans une fixation articulée (105, 111) avec la pièce à montage mural, le composant de crochet (102) pouvant tourner à l'aide de la fixation articulée (105, 111) entre une configuration ouverte et une configuration fermée, dans laquelle, lors de l'utilisation, dans la configuration ouverte, le composant de crochet (102) est conçu pour être inséré dans une roue de vélo et pour ranger la roue de vélo dans l'unité par laquelle la rotation d'articulation du composant de crochet vers ladite configuration fermée permet à la roue de vélo de descendre doucement sous l'effet de la gravité, de telle sorte que la roue est fixée par l'unité à montage mural.

2. Unité à montage mural selon la revendication 1, dans laquelle, lors de l'utilisation, dans la configuration fermée, une face du composant de crochet (102) est en contact facial avec une face de la pièce à montage mural.

3. Unité à montage mural selon la revendication 1 ou 2, dans laquelle, lors de l'utilisation, dans la configuration fermée, un plan du composant de crochet (102) est parallèle à un plan de la pièce à montage mural.

4. Unité à montage mural selon une quelconque revendication précédente, dans laquelle le composant de crochet (102) comprend une nervure.

5. Unité à montage mural selon la revendication 4, dans laquelle la pièce à montage mural comprend une plaque murale comprenant une feuillure (104), dans laquelle la nervure est conçue pour être insérée dans la feuillure (104) lorsque l'unité est dans une configuration fermée.

6. Unité à montage mural selon une quelconque revendication précédente, dans laquelle, lors de l'utilisation, le composant de crochet (102) peut tourner dans un plan vertical.

7. Unité à montage mural selon la revendication 6, dans laquelle, lors de l'utilisation, le composant de crochet (102) peut tourner vers le haut en passant de la configuration fermée à la configuration ouverte.

8. Unité à montage mural selon une quelconque revendication précédente, dans laquelle l'unité comprend une articulation (105, 111).

9. Unité à montage mural selon la revendication 8, dans laquelle l'articulation (105, 111) est creuse et conçue pour recevoir un cadenas de vélo.

10. Unité à montage mural selon la revendication 9, dans laquelle l'articulation (105, 111) comprend une première broche d'articulation, et l'articulation comprend un alésage conique conçu pour recevoir et pour fixer la première broche d'articulation.

11. Unité à montage mural selon la revendication 10, dans laquelle l'articulation (105, 111) comprend une seconde broche d'articulation et l'articulation comprend un alésage conique conçu pour recevoir et pour fixer la seconde broche d'articulation.

12. Unité à montage mural selon l'une quelconque des revendications 1 à 4 pour ranger et présenter des vélos ou des roues de vélo verticalement, la pièce à montage mural comprenant au moins une plaque murale, dans laquelle le composant de crochet (102) est conçu pour localiser la jante d'une roue, et comprenant une articulation (105, 111) permettant au composant de crochet (102) de tourner jusqu'à une position ouverte ou fermée.

13. Unité à montage mural selon la revendication 12, dans laquelle la plaque murale intègre un élément élastomère (113) pour protéger les jantes de roue nues autour de la circonférence au niveau des points de contact.

14. Unité à montage mural selon la revendication 5, dans laquelle des trous de fixation sont situés dans une ombre de la feuillure (104) et recouverts lorsque l'unité est dans la configuration fermée.

15. Unité à montage mural selon une quelconque revendication précédente, dans laquelle le composant de crochet (102), lorsqu'il n'est pas utilisé, peut être replié à plat.

16. Procédé d'utilisation d'une unité à montage mural selon une quelconque revendication précédente, pour ranger et présenter verticalement des vélos ou des roues de vélo, le procédé comprenant les étapes consistant à :
faire tourner le composant de crochet (102) selon un angle approprié au rayon de la roue de vélo, lorsque le composant de crochet (102) est ouvert ;
insérer la roue de vélo dans le composant de crochet (102), et
permettre à la roue de vélo de descendre doucement sous l'effet de la gravité, de telle sorte que la roue est fixée par l'unité à montage mural.
